# EUROPÄISCHE PATENTSCHRIFT

(11) **EP 0 838 480 B1**
(45) Veröffentlichungstag und Bekanntmachung des Hinweises auf die Patenterteilung: **31.05.2000**
(21) Anmeldenummer: 97117558.3
(22) Anmeldetag: 10.10.1997
(51) Int. Cl.: C08F 10/02

(54) **Verfahren zur Herstellung ketogruppenenthaltender Polyethylenwachse**
Method for producing of polyethylene waxes having keto groups
Procédé de préparation de cires de polyéthylène ayant des groupements carbonyles

(30) Priorität: 24.10.1996 DE 19644269
(43) Veröffentlichungstag der Anmeldung: 29.04.1998
(73) Patentinhaber: BASF AKTIENGESELLSCHAFT, 67056 Ludwigshafen (DE)
(72) Erfinder: Deckers, Andreas, Dr., 55234 Flomborn (DE); Schauss, Eckard, Dr., 67259 Heuchelheim (DE)

(56) Entgegenhaltungen:
- US-A- 3 865 881
- US-A- 4 698 450
- PATENT ABSTRACTS OF JAPAN vol. 013, no. 408 (C-634), 8.September 1989 & JP 01 149828 A (MITSUBISHI PETROCHEM CO LTD), 12.Juni 1989,

## Beschreibung

Gegenstand der vorliegenden Erfindung ist ein Verfahren zur Herstellung ketogruppenenthaltender Polyethylenwachse, bei denen mehr als 60 % Moleküle eine Ketogruppe tragen, durch Telomerisation von Ethylen mit Aldehyden bei Drücken zwischen 500 und 5000 bar und Temperaturen zwischen 100 und 280°C.

Weiterhin sind Gegenstand der vorliegenden Erfindung die nach dem erfindungsgemäßen Verfahren erhältlichen ketogruppenenthaltenden Polyethylenwachse.

Aus US 3,865,881 ist bekannt, Ketone in flüssiger Phase aus Ethylen und Aldehyden in Gegenwart von organischen Hydroperoxiden und katalytisch wirksamen Mengen von Kobalt-, Mangan-, Chrom- oder Eisenverbindungen herzustellen. Diese Reaktion ist als sogenannte "Telomerisation" bekannt.

Oxidierte Polyethylenwachse sind seit langem bekannt. Die Herstellung solcher Wachse kann beispielsweise durch Copolymerisation von Ethylen mit sauerstoffhaltigen Monomeren wie Alkencarbonsäuren und/oder deren Estern (s. z.B. DE-A-1 770 777) oder Vinylestern (DE-A-2 102 469), oder durch Oxidation von Paraffinen mit Oxidationsmitteln wie Chromsäure und Peroxiden (Houben-Weyl, Bd. 7, Teil 2b, S. 1287 ff., Georg Thieme Verlag, Stuttgart 1976 erfolgen. Diese Synthesewege führen jedoch stets zu statistischen Gemischen, in denen die oxidierten Kohlenstoffatome sich an verschiedenen Positionen im Polyethylengrundgerüst befinden können. Bei der nachträglichen Oxidation von vorgefertigtem Polyethylen treten zudem noch verschiedene Oxidationsstufen auf wie Keto-, Aldehyd-, Säure- oder Estergruppen.

Zur Steuerung des Molekulargewichts von Olefinpolymerisationen werden dem Polymerisationsgemisch häufig Reglersubstanzen zugesetzt. Als Reglersubstanzen dienen z.B. Wasserstoff, aber auch Aldehyde wie Propionaldehyd. So beschreibt DE-A-1 770 777 die Copolymerisation von Ethylen mit C₃-C₁₂-Carbonsäuren und C₄-C₈-Alkenen sowie gegebenenfalls zusätzlich Estern von Alkencarbonsäuren bei Drücken von 100 bis 4000 bar und Temperaturen von 110 bis 350°C, wobei dem Polymerisationsgemisch Regler, beispielsweise Propionaldehyd in einem Molanteil von 0,5 bis 6, bezogen auf 100 Molanteile Ethylen, zugesetzt werden. Diese ohnehin statistisch verteilt oxidierte Gruppen enthaltenden Copolymerisate scheinen nach den beschriebenen Polymeranalysen jedoch keinen nachweisbaren Anteil von Ketogruppen aus dem Propionaldehyd zu enthalten; Propionaldehyd scheint bei diesen Copolymerisationen nur als Molekulargewichtsregler zu fungieren.

US 4,698,450 offenbart ein zweistufiges Verfahren, bei dem zunächst Ethylen in Gegenwart einer Carbonylverbindung, vorzugsweise Acetaldehyd, polymerisiert wird. In einem zweiten Schritt werden dann niedermolekulare Komponenten des Polymerisats abgetrennt. Ein solcher, zusätzlicher Reinigungsschritt verteuert jedoch das Verfahren.

Aufgabe der vorliegenden Erfindung war es nun, ein Verfahren zur Herstellung ketogruppenenthaltender Polyolefinwachse zu finden, welches zu Polyethylenwachsen führt, bei denen die Oxofunktion an definierter Position des Moleküls zu finden ist und welche bezüglich ihrer Kettenlänge und ihrem Substitutionsgrad nur geringe Variabilität aufweisen.

Demgemäß wurde ein Verfahren zur Herstellung ketogruppenenthaltender Polyethylenwachse, bei denen mehr als 60 % der Moleküle eine Ketogruppe tragen, durch Telomerisation von Ethylen mit Aldehyden bei Drücken zwischen 500 und 5000 bar und Temperaturen zwischen 100 und 280°C gefunden, welches dadurch gekennzeichnet ist, daß man Ethylen und Aldehyd im Molverhältnis 5:1 bis 50:1 einsetzt.

Weiterhin wurden ketogruppenenthaltende Polyethylenwachse gefunden, die nach dem erfindungsgemäßen Verfahren erhältlich sind.

Das erfindungsgemäße Herstellverfahren kann unter den allgemein bekannten Bedingungen der Hochdruckpolymerisation von Ethylen durchgeführt werden. Der Druck, unter dem die Telomerisation stattfindet, liegt zwischen 500 und 5000 bar, vorzugsweise zwischen 1000 und 4000 bar, besonders bevorzugt zwischen 1500 und 3000 bar. Die Reaktionstemperatur kann zwischen 100 und 280°C, vorzugsweise zwischen 150 und 250°C liegen, wobei bei Temperaturen oberhalb von 250°C im allgemeinen Wachse mit niedrigerem Funktionalisierungsgrad erhalten werden.

Als Reaktor zur Durchführung der Telomerisationsreaktion sind alle üblichen Druckreaktoren einsetzbar, vorzugsweise wird die Reaktion in kontinuierlich betriebenen Rohrreaktoren oder kontinuierlich betriebenen gerührten Autoklaven durchgeführt.

Über das Molverhältnis von Ethylen und Aldehyd läßt sich sowohl das mittlere Molekulargewicht des Polyolefinwachses als auch der Funktionalisierungsgrad beeinflussen. Geeignete ketogruppenenthaltende Polyolefinwachse werden bei Molverhältnissen von Ethylen zu Aldehyd von 5:1 bis 50:1 erhalten. Vorzugsweise liegt dieses Molverhältnis bei 5:1 bis 20:1, besonders bevorzugt zwischen 5:1 und 15:1.

Die Eigenschaften der erfindungsgemäßen Polyethylenwachse lassen sich weiterhin durch die Wahl des Aldehyds modifizieren. Besonders geeignete Aldehyde zum Einsatz im erfindungsgemäßen Telomerisationsverfahren sind Verbindungen der allgemeinen Formel I 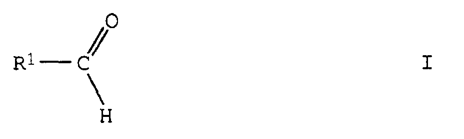 in der R¹ C₂-C₂₀-Alkyl oder C₂-C₂₀-Alkenyl, in welchem nicht benachbarte und nicht endständige CH₂-Gruppen auch durch -O-CO-, -CO-O- oder -CO- ersetzt sein können und welches durch Phenyl oder -CHO substituiert sein kann, oder C₆-C₂₀-Aryl bedeutet.

Als C₂-C₂₀-Alkylreste sind beispielsweise, Ethyl, n-Propyl, Isopropyl, n-Butyl, Isobutyl, sec-Butyl, tert-Butyl, sowie die verschiedenen verzweigten oder unverzweigten Isomere von Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl und Eicosyl zu nennen. Als C₂-C₂₀-Alkenylreste kommen die entsprechenden einfach oder mehrfach ungesättigten Reste in Betracht, wobei die Ethenylgruppe wegen der Neigung des Acroleins, in die Polyethylenkette statistisch integriert zu werden, in vielen Fällen weniger geeignet ist. Bevorzugte Alkenylreste sind solche mit terminaler Doppelbindung, da die aus solchen Aldehyden resultierenden Polyethylenwachse sich leicht am Molekülende weiter derivatisieren lassen, beispielsweise durch Epoxidierung mit anschließendem nukleophilen Angriff oder durch Additionsreaktionen an die Doppelbindung.

Die Alkyl- oder Alkenylreste R¹ können auch durch weitere Aldehydfunktionen substituiert sein. So lassen sich als Aldehyde der Formel I beispielsweise auch Dialdehyde wie Succindialdehyd oder Glutardialdehyd in dem erfindungsgemäßen Herstellverfahren umsetzen.

Unter den C₆-C₂₀-Arylgruppen R¹ ist besonders Phenyl und Naphthyl zu nennen, wobei diese aromatischen Reste durch Ester- oder Alkylgruppen substituiert sein können.

Die Reste R¹ sind C₂-C₆-Alkylgruppen, so daß also als Aldehyd, Propionaldehyd, Butyraldehyd, Pentanal oder Hexanal eingesetzt werden.

Die nach dem erfindungsgemäßen Herstellverfahren erhältlichen ketogruppenenthaltenden Polyethylenwachse weisen einige bemerkenswerte Eigenschaften auf. Sie zeigen einen hohen Funktionalisierungsgrad, so daß im allgemeinen mehr als 60 %, vorzugsweise mehr als 70 % der Moleküle eine Ketogruppe tragen. Andererseits zeichnen sie sich durch eine sehr enge Molekulargewichtsverteilung, ausgedrückt durch den Quotienten Q = M_{w}/Mₙ aus. Dieser Quotient liegt im allgemeinen zwischen 1,4 und 2,0 bei Molekulargewichten zwischen ca. 150 bis 1000 g/mol.

Diese geringe Variabilität sowohl in der Kettenlänge als auch im geringen Anteil nicht funktionalisierter Moleküle macht die erfindungsgemäßen ketogruppenenthaltenden Polyethylenwachse außer für die bekannten Anwendungen oxidierter Polyethylenwachse wie Bodenpflegemittel oder Überzugsmassen auch als Zwischenprodukt für weitere Umsetzungen zu interessanten und sonst zum Teil schwer zugänglichen Produktklassen interessant.

So können durch reduktive Aminierung aus den ketogruppenenthaltenden Wachsen sekundäre Amine erhalten werden, wie sie beispielsweise als Kraftstoffadditive Verwendung finden. Die reduktive Aminierung kann dabei nach allen dem Fachmann geläufigen Methoden durchgeführt werden.

Weiterhin lassen sich aus den ketogruppenenthaltenden Wachsen durch Reduktion sekundäre Alkohole herstellen, die ihrerseits wiederum zu verschiedenen Estern umgesetzt werden können. Auch die Reduktion kann nach allen dem Fachmann geläufigen Verfahren erfolgen.

Die folgenden Beispiele erläutern die Erfindung:

### Beispiele 1 bis 4:

Gasförmiges Ethylen (10 kg/h) wurde durch einen Membranverdichter in drei Stufen auf einen Druck von 220 bar verdichtet. Mit Hilfe einer Kolbenpumpe wurde der jeweilige Aldehyd in das überkritische Ethylen gepumpt, dann wurde das Gemisch weiter auf 1500 bar verdichtet und kontinuierlich in einen gerührten Durchflußautoklaven, welcher auf eine Temperatur von 220°C eingestellt war, gepumpt. Der Autoklav wies ein Volumen von 1 l und ein Längen/Durchmesser-Verhältnis von 5:1 auf. Die Oligomerisation wurde durch kontinuierliches Zupumpen einer Lösung von 0,2 Gew.-% tert-Butylperoxipivalat und 0,5 Gew.-% tert-Butylperoxy-3,5,5-trimethylhexanoat in Isodecan (Gew.-% jeweils bezogen auf das Gesamtgewicht der Lösung) gestartet (Dosiergeschwindigkeit 105 ml/min). Die mittlere Verweilzeit des Reaktionsgemisches im Autoklaven betrug ca. 90 Sekunden. Die Ergebnisse zeigt die nachfolgende Tabelle:

| Beispiel | Aldehyd | Mol-Verhältnis Ethylen/Aldehyd | Mₙ (g/mol) | Q M_{w}/Mₙ | Funktionalisierungsgrad* |
|---|---|---|---|---|---|
| 1 | Propionaldehyd | 10:1 | 460 | 2,0 | 71 % |
| 2 | Propionaldehyd | 8:1 | 250 | 1,9 | 75 % |
| 3 | Propionaldehyd | 5:1 | 220 | 1,9 | 78 % |
| 4 | Undec-ω-enal | 20:1 | 430 | 1,9 | 62 % |

| | | | | | |
|---|---|---|---|---|---|
| * Funktionalisierungsgrad ermittelt durch IR-Analyse der CO-Bande | | | | | |

## Patentansprüche

1. Verfahren zur Herstellung ketogruppenenthaltender Polyethylenwachse, bei denen mehr als 60 % der Moleküle eine Ketogruppe tragen, durch Telomerisation von Ethylen mit Aldehyden bei Drücken zwischen 500 und 5000 bar und Temperaturen zwischen 100 und 280°C, dadurch gekennzeichnet, daß man Ethylen und Aldehyd der allgemeinen Formel I 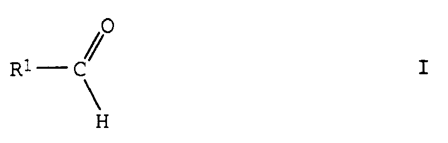 im Molverhältnis 5:1 bis 20:1 einsetzt, in der R¹ C₂-C₂₀-Alkyl oder C₂-C₂₀-Alkenyl, in welchem nicht benachbarte und nicht endständige CH₂-Gruppen auch durch -O-CO-, -CO-O- oder -CO- ersetzt sein können und welches durch Phenyl oder -CHO substituiert sein kann, oder C₆-C₂₀-Aryl bedeutet.

2. Verfahren nach Anspruch 1, dadurch gekennzeichnet, daß man Ethylen und Aldehyd im Molverhältnis 5:1 bis 15:1 einsetzt.

3. Ketogruppenenthaltende Polyethylenwachse, erhältlich nach einem Verfahren gemäß den Ansprüchen 1 bis 2.

## Claims

1. A process for preparing keto-functional polyethylene waxes in which more than 60 % of the molecules carry a keto group by telomerization of ethylene with aldehydes at from 500 to 5000 bar and from 100 to 280°C, wherein ethylene and aldehyde of the formula I 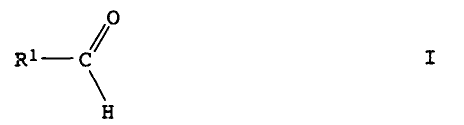 are employed in a molar ratio of from 5:1 to 20:1, where R¹ is C₂-C₂₀-alkyl or C₂-C₂₀-alkenyl, in which nonadjacent and nonterminal CH₂ groups may also be replaced by -O-CO-, -CO-O- or -CO- and which may be substituted by phenyl or -CHO, or is C₆-C₂₀-aryl.

2. The process as claimed in claim 1, wherein ethylene and aldehyde are employed in a molar ratio of from 5:1 to 15:1.

3. Keto-functional polyethylene waxes obtainable in accordance with a process as claimed in claims 1 and 2.

## Revendications

1. Procédé de préparation de cires de polyéthylène contenant des groupes céto, dans lesquelles plus de 60 % des molécules portent un groupe céto, par télomérisation de l'éhylène avec des aldéhydes sous des pressions de 500 à 5000 bar et à des températures de 100 à 280°C, caractérisé par le fait que l'on met en oeuvre de l'éthylène et un aldéhyde de formule générale I 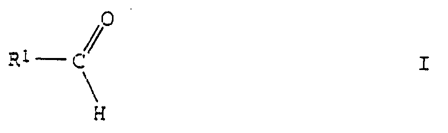 à un rapport molaire de 5 : 1 à 20 : 1, R¹ représentant un groupe alkyle en C2-C20 ou alcényle en C2-C20 dans lequel des groupes CH₂ non voisins et non terminaux peuvent également être remplacés par -O-CO-, -CO-O- ou -CO- et qui peut être substitué par un groupe phényle ou -CHO, ou un groupe aryle en C6-C20.

2. Procédé selon la revendication 1, caractérisé par le fait que l'on met en oeuvre l'éhylène et l'aldéhyde à un rapport molaire de 5 : 1 à 15 : 1.

3. Cires de polyéthylène contenant des groupes céto, obtenues par un procédé selon les revendications 1 à 2.
